# EUROPEAN PATENT APPLICATION

(11) **EP 1 906 284 A1**
(43) Date of publication of application: **02.04.2008**
(21) Application number: 06121445.8
(22) Date of filing: 28.09.2006
(51) Int. Cl.: G05B 19/409

(54) **A control device for controlling an industrial robot**

(71) Applicant: ABB AB, 721 83 Västerås (SE)
(72) Inventor: Eriksson, Peter, SE-723 41, Västerås (SE)
(74) Representative: Reyier, Ann-Mari

(57) **Abstract**

This invention concerns a handheld control device for controlling an industrial robot including a manipulator. The handheld control device is adapted to manually control the movements of the manipulator during manual mode of operation. The handheld control device also comprises a main control unit (44) adapted to automatically control the movements of the manipulator based on a robot program including movement instructions.

## Description

### TECHNICAL FIELD

The present invention is concerned with a handheld control device for controlling an industrial robot including a manipulator.

The invention also relates to an industrial robot comprising a manipulator and a handheld control device.

### BACKGROUND ART

An industrial robot comprises a manipulator and a control system for controlling the movements of the manipulator. Such an industrial robot is, for example known from the international patent application W02006/000263A1. A manipulator is a movable mechanical unit, the movements of which are driven by one or more motors. Traditionally, the control system includes a stationary control device and a handheld control device. The stationary control device comprises a main control unit including a program memory for storing robot programs including movement instructions for the robot, a program executer for executing the movement instructions and a path planner for planning robot paths based on the movement instructions and for generating control signals to drive units of the robot. During operation of the robot, the program instructions are executed, thereby making the robot work as desired. Drive units are controlling the motors of the robot. The control instructions from the main control unit are transformed into control signals for the drive units of the manipulator.

The handheld control device, generally denoted a Teach Pendant Unit, is used by the robot operator for manually controlling the movements of the manipulator, for example, when teaching the robot a new operating path. The handheld control device normally comprises operator control means, for example a joystick, a space ball, a set of function keys or any combination thereof, a visual display unit, and safety equipment including an enabling device and an emergency stop device or a stop device. The enabling device enables or disables manual control of the robot by means of the handheld control device. The enabling device affects the possibility to generate current to the motors of the robot. The handheld control device communicates with the main control unit using wired or wireless technique.

An industrial robot can be operated in at least two different operation modes: normal and manual. Sometimes, normal mode is also denoted automatic mode. The stationary control device is usually provided with a mode switching means for switching between normal and manual mode. When the robot is in normal operation mode, the movements of the manipulator are controlled by the main control unit. During normal mode, it is possible to automatically operate the robot in accordance with stored robot programs, including movement instructions for the robot. It is normally not possible to manually move the robot during normal mode. Normal mode is used during normal operation of the robot, for example when the robot performs work in a production line. Manual mode is, for example, used during teaching and programming of the robot.

When the robot is in manual operation mode, the robot is controlled by means of the handheld control device. When the robot is in manual mode, the handheld control device has exclusive right to operate the robot and thus no other control device is allowed to control the robot. During manual mode, it is possible to manually move the robot by means of the hand held control device. It is also possible to start, stop and edit robot programs from the handheld control device. When manual mode is selected and the enabling device is activated, it possible to manually operate the robot by means of the handheld control device. When the enabling device is deactivated, it is not possible to manually operate the robot. If manual mode is selected it is possible to move the robot, for example by means of the joystick, provided that the enabling device of the handheld control device is activated. The enabling device is for example a switch or a push button, which has to be pressed by the operator to enable control of the robot by the handheld control device. The status of the enabling device is either activated or deactivated. In normal mode it is not possible to move the robot with the handheld control device, even with the enabling device activated.

However for a customer with limited economy, an industrial robot comprising the above described hardware equipment is an expensive investment.

### SUMMARY OF THE INVENTION

The object of the invention is to provide a less expensive industrial robot.

In one aspect of the invention this object is achieved by a handheld control device as defined by claim 1.

According to the invention, the handheld control device comprises a main control unit adapted to automatically control the movements of the manipulator based on a robot program including movement instructions for the manipulator.

Thereby, the main control function of the industrial robot is physically moved into the handheld control device. Preferably, the main control unit and the handheld control device share the same hardware. This means that the stationary control device is no longer needed and consequently can be eliminated. Thus, the hardware cost of the robot is significantly reduced and the manufacturing of the robot is simplified. This decrease the production costs and material costs to produce the robot. According to the invention, all functionality of the control system is gathered in one single device. This means that there in no need to transfer data between two physically separated devices, as in the prior art. Thus, costly communication equipment, such as cables, transmitters and receivers is no longer needed. This also reduces the hardware cost of the robot. A control device according to the invention may provide the same functionality as the prior art control systems, but possible with a reduced capacity. This solution is particularly useful in smaller applications, in which a less powerful control system can be used.

According to an embodiment of the invention the handheld control device comprises a mode switching means for switching between manual and normal operation mode, an emergency stop device adapted to effect emergency stop of the robot upon activation, and an enabling device adapted to enable manual movement of the robot during manual mode. Previously, the switching device was located at the stationary control device and the emergency stop device and the enabling device were located at the handheld control device. Due to safety high demands, expensive measures have to be taken when transferring safety data between physically separated modules. For example, it is required that all signals are redundant. According to this embodiment, the mode switching means, the emergency stop, and enabling devices are all located at the handheld control device. This is advantageous because the mode switching means, the emergency stop device and the enabling device are all safety equipment and part of the safety system for the robot. The safety system continuously needs information on the status of the safety equipment. By locating all safety equipment in the same physical entity, transfer of status signals from the safety equipment is simplified, and accordingly, the hardware cost is further reduced.

According to an embodiment of the invention, the handheld control device further comprises a safety unit adapted to carry out safety functions of the robot and to transmit an enabling signal to one or more drive units controlling motors of the robot based on the status of the mode switching means, the status of the emergency stop device, and the status of the enabling device. The enabling signal either enables or disables the motors, and is based on the status of all three safety devices. The enabling signal shall enable the motors of the robot in case the mode switching means is set to manual mode, the enabling device is activated, and the emergency stop device is not activated. The enabling signal shall further enable the motors in case the mode switching means is set to normal mode and the emergency stop device is not activated. The enabling signal shall disable the motors if the emergency stop device is activated. According to the prior art, two signals, i.e. the status of the enabling device and the status of the emergency stop device, are transmitted between the handheld control device and the stationary control device. This embodiment makes it possible to ensure that the safety conditions for enabling the drive units is fulfilled by transmitting only one signal from the handheld control device to the motors, which decrease the number of wires or wireless links needed for transmitting the status on each safety equipment. Thus, the number of signals, which has to be transmitted between physically separate modules of the robot, is reduced.

According to an embodiment of the invention, the main control unit includes a program memory for storing robot programs including movement instructions for the robot, a program executer for executing the movement instructions and a path planner for planning robot paths based on the movement instructions, and for generating control signals to the one and more drive units of the robot. The core functionality of the main control unit, such as program storage, program execution and path planning, is moved into the handheld control device. In that way, it is possible to eliminate the stationary control device.

According to an embodiment of the invention, the handheld control device comprises a man-machine interface for teaching and programming the robot and for communicating with the main control unit. The same man-machine interface is used for communication between the robot operator and the control system of the robot during manual and normal mode.

According to an embodiment of the invention, the main control unit comprises a main controller software module adapted to control the movements of the manipulator during normal mode and the handheld control unit comprises a computer means adapted to receive, store and run the main controller software module. The main control unit can easily be implemented on the handheld control device by simply loading the controller software module. The handheld control device is provided with hardware, such as memory and processor means, for storing and running the controller software module.

According to a second aspect of the invention the object is achieved by an industrial robot as defined by claim 8.

According to an embodiment of the invention, the robot comprises one or more drive units for generating control signals to motors of the manipulator in response to reference signals from the main control unit, and the handheld control device is adapted to send said reference signals to the drive units, wherein the drive units are located near, on, or inside the manipulator close to the motors. This is advantageous because the drive units are located close to the motors and thereby less wiring is needed for connecting each drive unit to the motor it controls.

Features and advantages of the embodiments of the industrial robot appear from the description above of corresponding claims.

### BRIEF DESCRIPTION OF THE DRAWINGS

The present invention will be described in more detail in connection with the enclosed schematic drawings.
Figure 1 shows schematically an overview of an industrial robot comprising a handheld control device according to an embodiment of the invention,
Figure 2 shows the handheld control device in figure 1 more in detail, and
Figure 3 shows a block diagram showing the functions of the handheld control device in figure 1.

### DESCRIPTION OF THE PREFERRED EMBODIMENTS

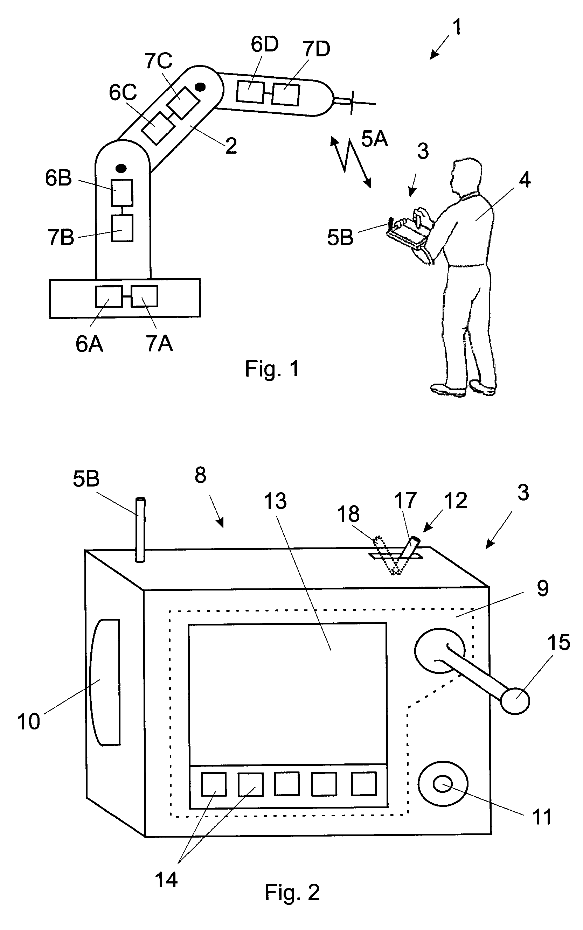

Figure 1 shows an industrial robot 1 including a manipulator 2 and a handheld control device 3 according to the invention. The control device 3 is held by an operator 4. The industrial robot comprises a plurality of drive units 6A, 6B, 6C, 6D, for generating drive unit control signals to motors 7A, 7B, 7C, 7D, of the manipulator 2. The drive units 6A, 6B, 6C, 6D and the motors 7A, 7B, 7C, 7D are in this embodiment arranged at the manipulator 2. All drive units and motors are not shown in the figure. Alternatively, only one drive unit controlling all motors can be used. The control device 3 is adapted to communicate with the drive units. The control device is adapted to send joint reference, such as joint position values, to the drive units, and to receive measured positions, such as motor or joint positions, from the drive units. The control device 3 is in this case communicating with the drive units via a wireless data link 5A.

Figure 2 shows the handheld control device 3 in more detail. The control device 3 comprises a portable box 8 including a man-machine interface 9, an enabling device 10, an emergency stop device 11, and a mode switching means 12. The control device, in this case, also includes and antenna 5B for wireless communication with the control unit 3. The man-machine interface 9 is adapted to communicate with the control system of the robot, such as displaying error messages and receiving orders from the operator, to program and teach the robot, and to start, stop and edit robot programs. The man-machine interface 9 comprises in this case a display screen 13, function keys 14, and a joystick 15. The function keys 14 permit the operator 4 to select various states for the control system. The joystick 15 is used for controlling the movement of the manipulator when the robot is manually operated. Alternatively, the joy-stick is replaced with buttons, a space ball, or a corresponding device for positioning the manipulator. The display screen is, for example, a touch screen.

The enabling device 10 is adapted to enable manual movement of the robot upon activation during manual mode. The enabling device 10 comprises a switch that is opened or closed in dependence on the state of the enabling device 10. The enabling device 10 has to be activated before the operator 4 is allowed to operate the robot manually. The enabling device 10, for instance, comprises a button, which has to be pressed down by the operator 4 to enable control of the robot by the control device 3. When the operator 4 releases the button of the enabling device 10, the robot can no longer be manually operated by the control device 3. The status of the enabling device is either activated or deactivated. If the enabling device is a push-button, the status of the enabling device is activated when the operator presses the button, and the status of the enabling device is deactivated when the button is released. Some enabling devices have three positions: a first position when the button is released, a second position when the button is pressed, and a third position when the push-button is pressed harder. In such cases the enabling device is deactivated when the button is in the first and the third position.

The emergency stop device 11 is adapted to emergency stop upon activation. The emergency stop device 11, for instance, comprises an emergency stop button. The status of the emergency stop device is either activated or deactivated. If the emergency stop is a push-button, the status of the emergency stop device is activated when the operator presses the button, and the status of the emergency stop device is deactivated when the button is released.

The mode switching means 12 is adapted for switching between manual and normal mode. The mode switching means 12 comprises a switch, which has at least two positions, the first position 17 and the second position 18. When the operator 4 moves the switch into the first position 17 the robot is run in manual mode, and when the operator 4 moves the switch into the second position 18 the robot is run in normal mode. The enabling device 10, the emergency stop device 11 and the mode switching means 12 is part of the safety equipment of the control device 3.

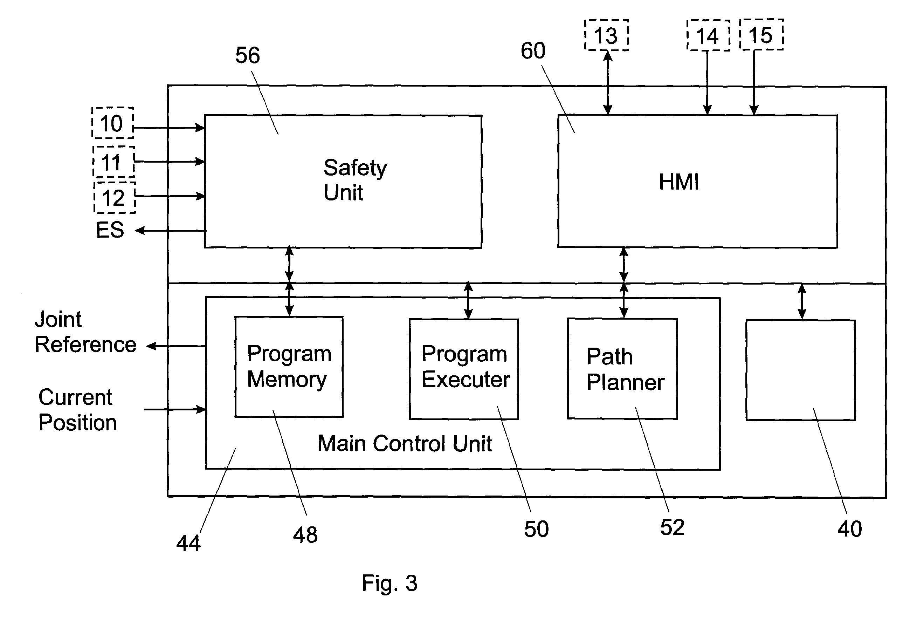

Figure 3 shows by means of a block diagram the control device 3 according to an embodiment of the invention. The handheld control device comprises a computer means 40 for executing software modules of the invention. The computer means 40 includes memory means, a microprocessor, or processors comprising a central processing unit (CPU) or a field-programmable gate array (FPGA) or any semiconductor device containing programmable logic components. The control device 3 comprises a main control unit 44 adapted to control the movements of the manipulator based on a robot program including movement instructions. The main control unit 44 comprises a program memory 48 for storing robot programs including movement instructions for the robot, a program executer 50 for executing the movement instructions, and a path planner 52 for planning robot paths based on the movement instructions and generating joint reference signals to the drive units 6A,6B,6C,6D of the robot. The main control unit receives feedback in form of current positions from the drive units. The main control unit comprises a main controller software module, including one or more sub-modules adapted to control the movements of the manipulator. The sub-modules perform the functionality of the main control unit, such as path planning and generation of reference signals. The computer means (40) is adapted to run the main controller software module.

The control device 3 further comprises a safety unit 56 providing a check of the safety equipment. The safety device 56 is adapted to carry out safety functions of the robot and to transmit an enabling signal to the drive units controlling the motors of the robot based on the status of the mode switching means 12, the emergency stop device 11 and the enabling device 10. The enabling signal enables and disables the motors. In order to enable the motors in manual mode, the enabling device 10 has to be activated, the emergency stop device 11 has to be inactivated, and the mode switching means 12 is set in manual mode. Further, to enable the motors in normal mode, the emergency stop device 11 has to be inactivated, and the mode switching means 12 is set in the normal mode. A single enabling signal is thereby produced as a resulting reading of the current status of the enabling device 10, the emergency stop device 11, and the mode switching means 12. The single enabling signal is then transmitted to the drive units.

The safety unit 56 receives information on the status of the emergency stop device 11, the enabling device 10, and the mode switching means 12 and produces the enabling signal ES, described above. In both normal and manual mode the enabling signal ES is produced as a resulting reading of the current status of the enabling device 10, the emergency stop device 11 and the mode switching means 12. The single enabling signal is then transmitted to the drive units.

The control device further comprises a human man interface software module 60 for controlling the man-machine interface 9. The human man interface software module receives signals and information from the joy-stick 15, the push-buttons 14, and the touch screen 13 and presents information to the operator on the screen 13. The human man interface software module is adapted to communicate with the main control unit 44 and the safety unit 56.

The present invention is not limited to the embodiments disclosed but may be varied and modified within the scope of the following claims. For example, the control device may also communicate with the drive unit or drive units by wire. For example, the man machine interface may include a colour screen or a voice recognition unit.

The embodiment disclosed includes a minimum of functionality. However, in other embodiments of the invention, more functionality may be added to the handheld control unit, such as process control, external communication, control of multiples of manipulators, and control of external axes. The human- man interface can also be adapted to communicate with additional modules outside the control device, such as process equipment, sensors, and line control system.

## Claims

1. A handheld control device (3) for controlling an industrial robot including a manipulator (2), which device is adapted to manually control the movements of the manipulator during manual mode of operation, **characterized in that** said handheld control device comprises a main control unit (44) adapted to automatically control the movements of the manipulator based on a robot program including movement instructions for the manipulator.

2. The handheld control device (3) according to claim 1, wherein said main control unit (44) includes a program memory (48) for storing robot programs including movement instructions for the manipulator, a program executer (50) for executing said movement instructions, and a path planner (52) for planning robot paths based on said movement instructions and for generating reference signals to one or more drive units (6A,6B,6C,6D) of the robot.

3. The handheld control device (3) according to claim 1 or 2, wherein it comprises a man-machine interface (9, 60) for teaching and programming the robot and for communicating with the main control unit (44).

4. The handheld control device (3) according to any of the preceding claims, wherein it comprises a mode switching means (12) for switching between manual and normal mode of operation, an emergency stop device (11) adapted to effect emergency stop of the robot upon activation, and an enabling device (10) adapted to enabling manual movement of the robot during manual mode.

5. The handheld control device (3) according to claim 4, wherein it further comprises a safety unit (56) adapted to carry out safety functions of the robot and to transmit an enabling signal (ES) to one or more drive units, for (6A,6B,6C,6D) controlling motors (7A,7B,7C,7D) of the robot, based on the status of the mode switching means (12), the emergency stop device (11) and the enabling device (10).

6. The handheld control device (3) according to any of claims 1-5, wherein said main control unit (44) comprises a main controller software module adapted to control the movements of the manipulator (2) and said handheld control unit comprises a computer means (40) adapted to run said main controller software module.

7. An industrial robot (1) comprising a manipulator (2) and a handheld control device (3) according to any of claims 1-6.

8. The industrial robot according to 7, wherein it comprises one or more drive units (6A,6B,6C,6D) for generating control signals to motors (7A,7B,7C,7D) of the manipulator (2) in response to reference signals from the main control unit, and the handheld control device is adapted to send said reference signals to the drive units, wherein the drive units are located near, on, or inside the manipulator.
